# EUROPEAN PATENT APPLICATION

(11) **EP 2 981 132 A1**
(43) Date of publication of application: **03.02.2016**
(21) Application number: 14776241.3
(22) Date of filing: 25.03.2014
(51) Int. Cl.: H04W 36/08, H04W 92/12

(54) **COMMUNICATION DEVICE AND HANDOVER CONTROL METHOD IN RADIO COMMUNICATION SYSTEM**

(30) Priority: 29.03.2013 JP 2013074908
(71) Applicant: NEC Corporation, Tokyo 108-8001 (JP)
(72) Inventor: YANAGISAKO, Yoshifumi, Tokyo 108-8001 (JP); MATSUNAGA, Yasuhiko, Tokyo 108-8001 (JP)
(74) Representative: MacDougall, Alan John Shaw
(86) International application number: PCT/JP2014/001699
(87) International publication number: WO 2014/156121

(57) **Abstract**

Communication apparatus in a wireless communication system and handover control method in the same are provided that enable handover information to be notified to the source side of a handover regardless of the types of UEs. When a communication apparatus (20) managed by an upper-level network (30) has established a connection with a terminal (40) during handover operation of the terminal (40), the communication apparatus (20) sets information about the handover of the terminal in a handover complete message and sends it to the upper-level network (30), and a source-side communication apparatus (10) acquires the handover information from a handover success notice from the upper-level network.

## Description

### [Technical Field]

The present invention relates to a wireless communication system such as a cellular system and, more particularly, to communication apparatuses that perform inter-cell handover control and methods for handover control.

### [Background Art]

In recent years, active studies have been conducted on SON (Self Organizing Network), which autonomously optimizes radio parameters and network configurations in wireless communication systems, in view of operation cost (OPEX) reduction and the like. Standardization of SON functions is underway also in LTE (Long Term Evolution) of 3GPP (3^{rd} Generation Partnership Project).

One of the major SON functions is optimization of handover parameters (Mobility Robustness Optimization: MRO). MRO is a function of adjusting a handover parameter by base stations exchanging information on handover failures that occurred in the past. Causes for a handover failure include "too early handover", "too late handover", and "handover to wrong cell". Of these causes, it is important that a handover source base station (hereinafter, referred to as "source base station" or "source eNB") should detect a too late handover/handover to wrong cell. It has great impact on the MRO characteristics whether or not a too late handover, in particular, can be detected. Accordingly, several methods have been proposed for notifying such handover failure information to a source base station.

For example, NPLs 1 and 2 describe a method in which a UE (User Equipment) is made to send RLF (Radio Link Failure) Report, information that allows a too late handover/handover to wrong cell to be detected, which is then transferred to a source base station over the X2 interface. Moreover, PTL 1 discloses a method in which RLF information is transferred to a source base station over the X2 interface, whereby the source base station can identify the type of a failure occurring before/during/after a handover. Furthermore, NPL 3 proposes a method in which RLF Report is transferred to a source base station over the S1 interface when there is no X2 interface between base stations that are, for example, geographically far from each other.

### [Citation List]

### [Patent Literature]

Japanese Patent Application Unexamined Publication No. 2011-530912

### [Non-patent Literature]

[NPL 1]
   3GPP TS36.331 V11.2.0 (2012-12)
[NPL 2]
   3GPP TS36.423 V11.3.0 (2012-12)
[NPL 3]
   3GPP TSG-RAN WG3#78 R3-122667

### [Summary of Invention]

### [Technical Problem]

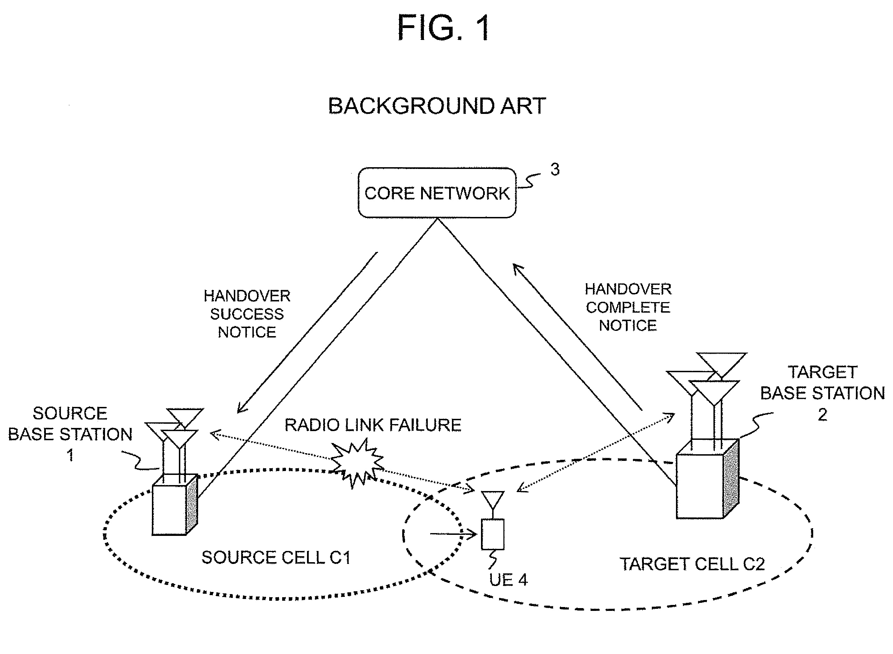

However, the methods for notifying handover failure information as described above can only be applied to UEs that support 3GPP Release 10, and information cannot be obtained from UEs that support 3GPP Release 9. A case will be considered as an example in which a radio link failure has occurred when a handover (hereinafter, abbreviated to HO as appropriate) is performed between two base stations as shown in FIG. 1.

Referring to FIG. 1, it is assumed that a source base station 1 and a target base station 2 with no X2 interface therebetween perform a handover of a UE 4 in accordance with a handover command from a core network 3. In this event, if the UE 4 is moving at a higher speed than a speed set by a handover parameter, radio waves from the source base station 1 become weak before the handover is completed, resulting in the connection being lost in some cases (too late handover). In such a situation, if the UE 4 is located in a target cell C2, the UE 4 will establish a connection with the target base station 2.

When a connection is thus established with the UE 4, the target base station 2 sends the core network 3 the same handover complete notice that is sent when a handover has succeeded, regardless of the process of a procedure in the handover of the UE 4 with which a connection has been established. That is, if the UE 4 is able to connect to the target cell C2 belonging to the target base station 2 by means of reconnection, the target base station 2, even in a state of waiting to receive a connection reconfiguration complete message from the UE 4 to be handed over, determines that the handover has succeeded and sends a handover complete notice. It is impossible to set in this handover complete notice any information indicating whether the handover has been completed normally by receiving a connection reconfiguration complete message from the UE 4, or whether the handover has succeeded after a radio link failure occurred to the UE 4. The core network 3 therefore can only determine that the handover has been completed normally, and so sends a handover success notice to the source base station 1. Accordingly, the source base station 1 also only recognizes that the handover has been completed normally, and cannot detect a too late handover. In case of a handover to wrong cell as well, if a connection is able to be made to another target cell belonging to the target base station 2, it is determined that the handover has succeeded, and a handover complete notice is sent.

Accordingly, an object of the present invention is to provide a communication apparatus in a wireless communication system and a method for handover control in the same that enable handover information to be notified to the handover source side regardless of the types of UEs.

### [Solution to Problem]

A communication apparatus according to the present invention is a communication apparatus managed by a upper-level network, characterized by comprising: handover information generation means that, upon establishing a connection with a terminal during operations for a handover of the terminal, generates information about the handover of the terminal; and handover control means that sets the information about the handover in a handover complete message and sends it to the upper-level network.

A communication apparatus according to the present invention is a communication apparatus managed by a upper-level network, characterized by comprising: handover control means that receives a handover success message from the upper-level network during operations for a handover of a terminal and completes the operations for the handover; and handover information analysis means that acquires information about the handover from the handover complete message.

A wireless communication system according to the present invention is a wireless communication system including a plurality of communication apparatuss managed by a upper-level network, characterized in that a target communication apparatus as a target of a handover of a terminal, upon establishing a connection with the terminal during operations for this handover, sets information about the handover of the terminal in a handover complete message and sends it to the upper-level network, and a source communication apparatus as a source of the handover of the terminal acquires the information about the handover from a handover success message received from the upper-level network during operations for the handover of the terminal.

A method for handover control according to the present invention is a method for handover control in a communication apparatus managed by a upper-level network, characterized by comprising: when a connection with a terminal is established during operations for a handover of the terminal, generating information about the handover of the terminal; and setting the information about the handover in a handover complete message and sending it to the upper-level network.

A method for handover control according to the present invention is a method for handover control in a communication apparatus managed by a upper-level network, characterized by comprising: receiving a handover success message from the upper-level network during operations for a handover of a terminal; and acquiring information about the handover from the handover complete message.

### [Advantageous Effects of Invention]

According to the present invention, information about a handover is set in a handover complete message and sent to a upper-level network, whereby a communication apparatus on the handover source side can acquire handover information regardless of the types of UEs.

### [Brief Description of Drawings]

[FIG. 1]
   FIG. 1 is a schematic diagram of a network architecture for describing problems with handover control in an existing wireless communication system.
[FIG. 2]

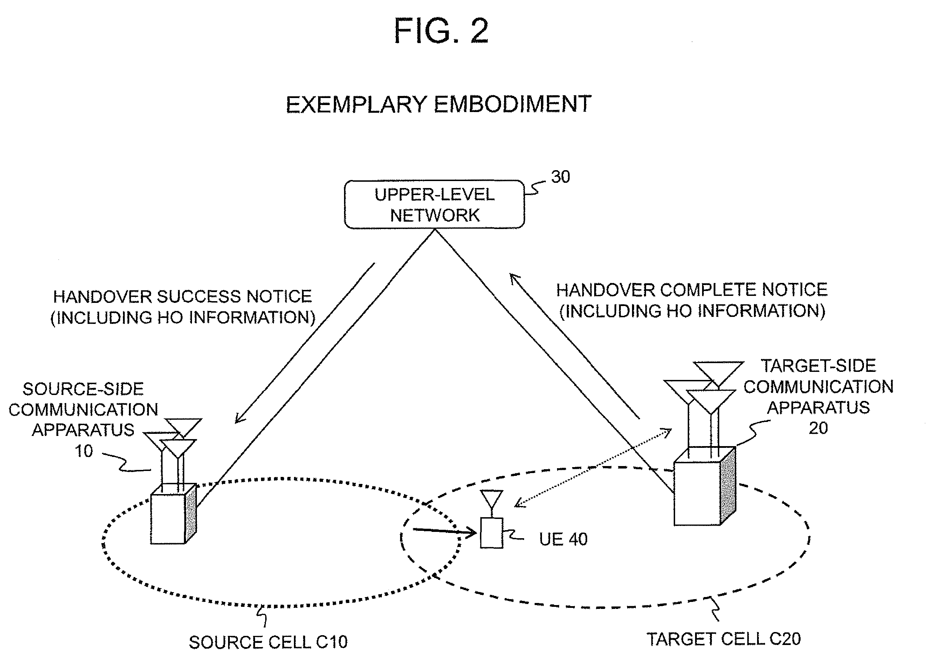

   FIG. 2 is a schematic diagram of a network architecture for describing handover control operations according to an exemplary embodiment of the present invention.
[FIG. 3]

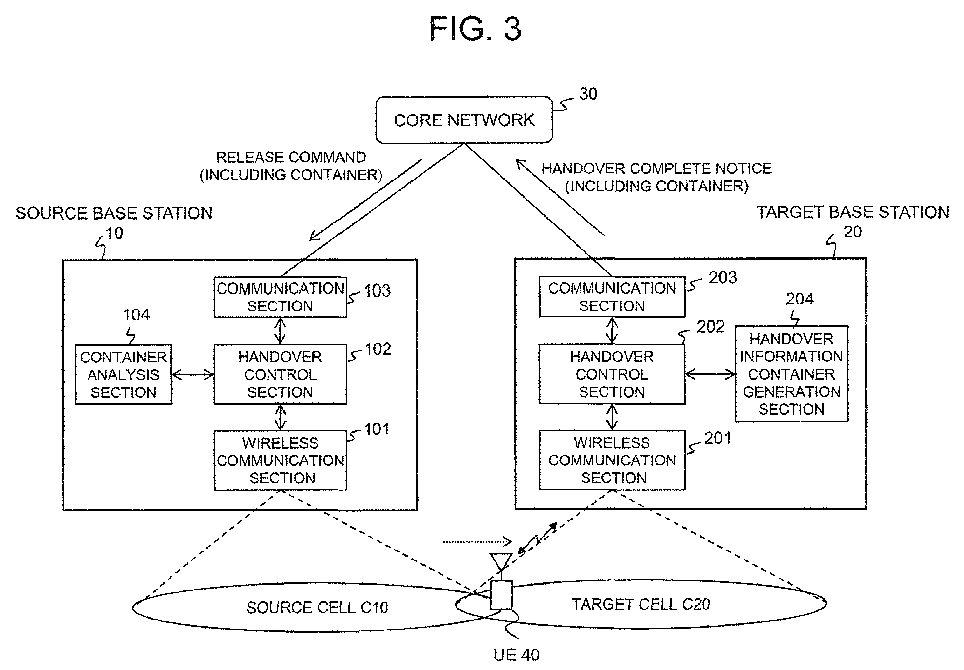

   FIG. 3 is a block diagram showing handover control-related functional configurations of communication apparatuss, according to the present exemplary embodiment.
[FIG. 4]

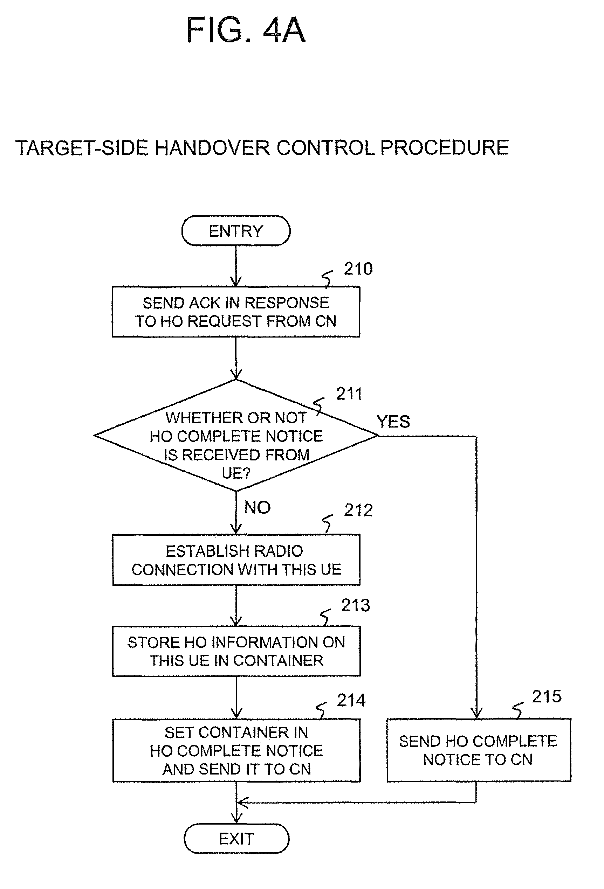

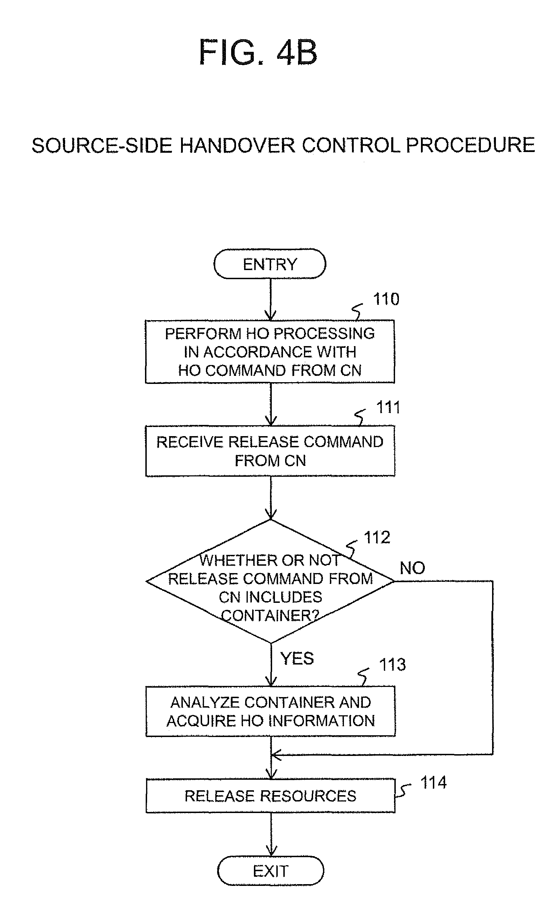

   FIG. 4A is a flowchart showing a handover control procedure on the target side in FIG. 3, and FIG. 4B is a flowchart showing a handover control procedure on the source side in FIG. 3.
[FIG. 5]

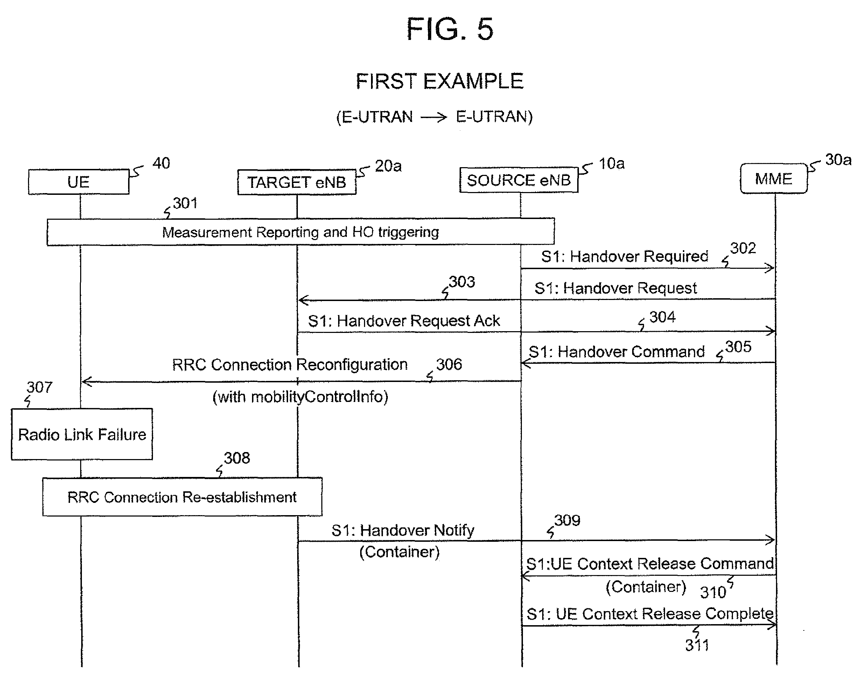

   FIG. 5 is a sequence diagram showing a handover control procedure in a wireless communication system according to a first example of the present invention.
[FIG. 6]

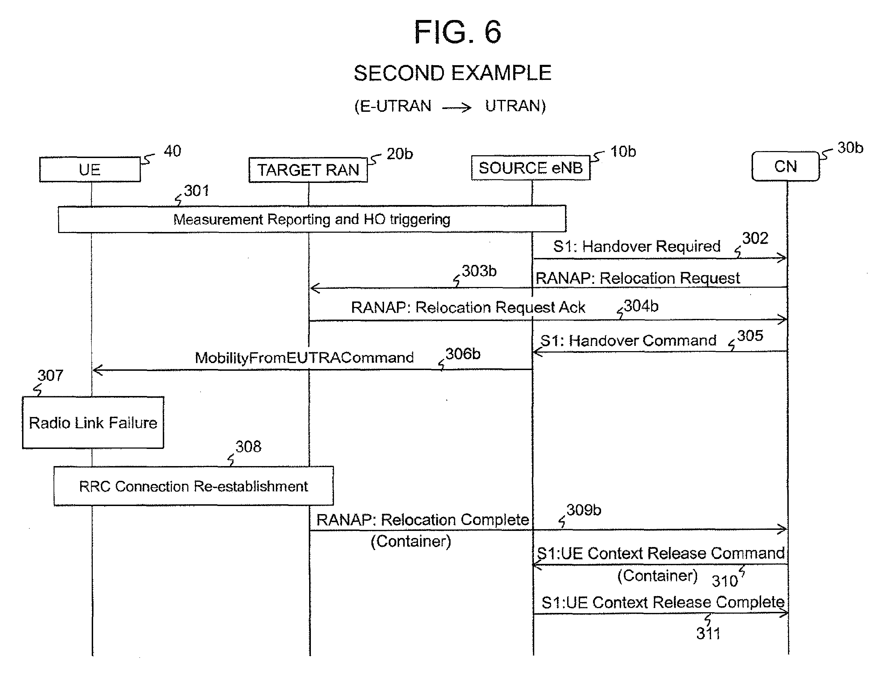

   FIG. 6 is a sequence diagram showing a handover control procedure in a wireless communication system according to a second example of the present invention.
[FIG. 7]

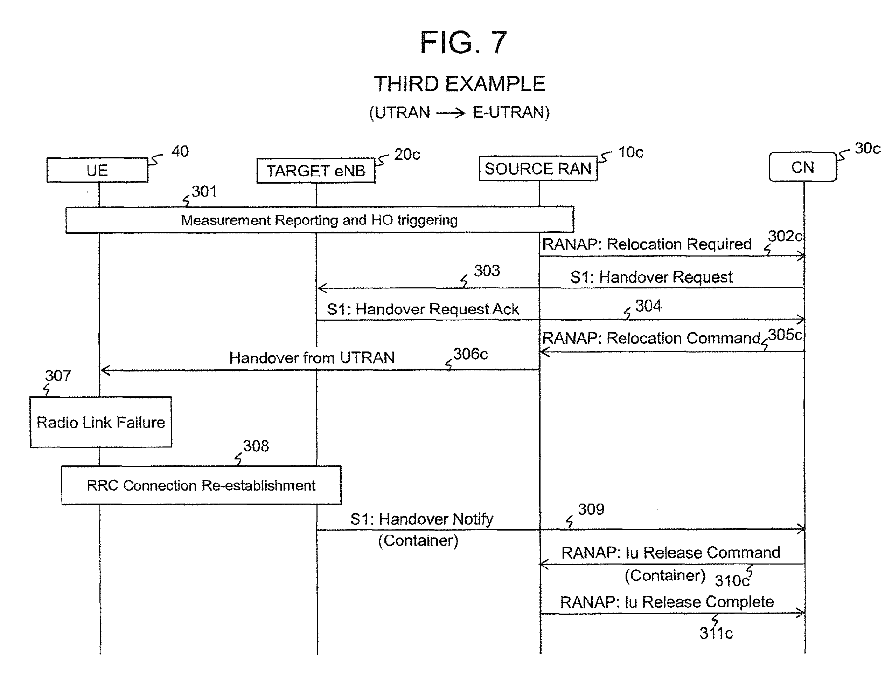

   FIG. 7 is a sequence diagram showing a handover control procedure in a wireless communication system according to a third example of the present invention.
[FIG. 8]

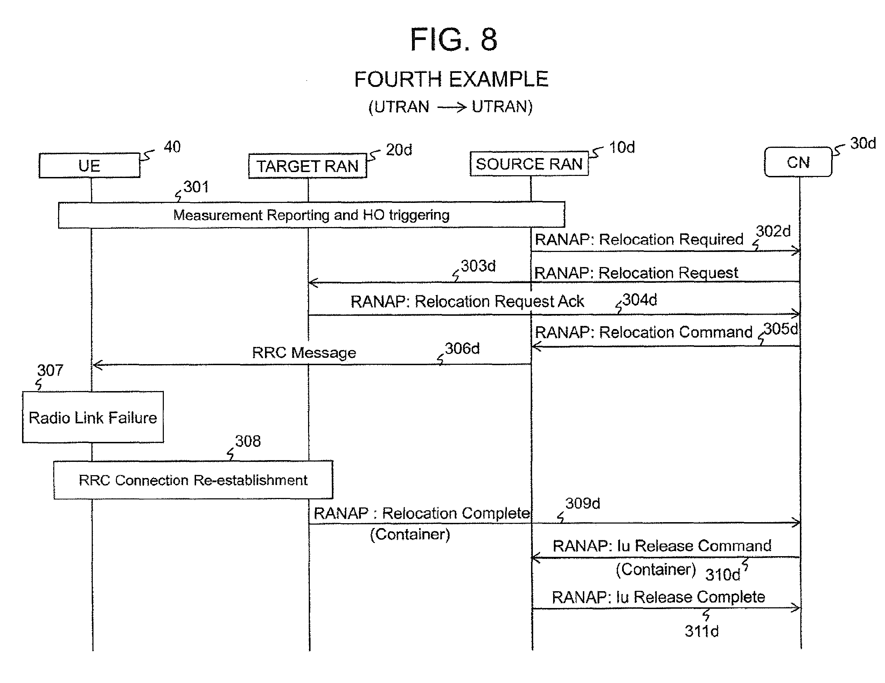

   FIG. 8 is a sequence diagram showing a handover control procedure in a wireless communication system according to a fourth example of the present invention.
[FIG. 9]

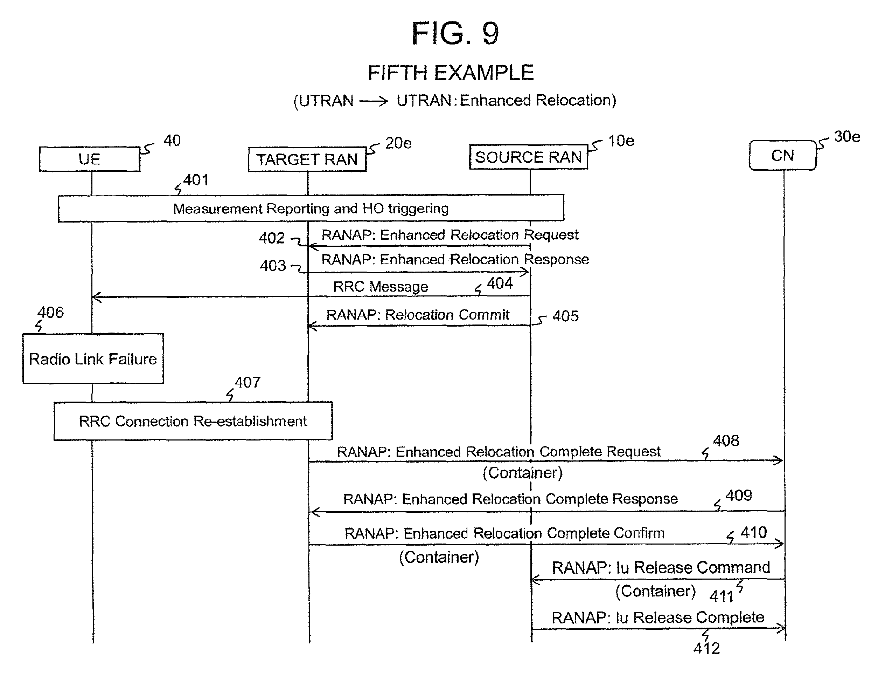

   FIG. 9 is a sequence diagram showing a handover control procedure in a wireless communication system according to a fifth example of the present invention.

### [Description of Embodiments]

According to an exemplary embodiment of the present invention, when a communication apparatus on the handover target side is connected to a UE to be handed over, a predetermined message to which information about this handover is added is notified from the target-side communication apparatus to a source-side communication apparatus via an upper-level network. For example, the target-side communication apparatus generates handover information when detecting a connection with the UE during a handover process and sends the upper-level network a handover complete message to which the handover information is added. The upper-level network having received this handover complete message sends the source-side communication apparatus a handover success message to which the handover information is added. Thus, the source-side communication apparatus can detect a handover status such as too late handover or handover to wrong cell, without depending on the functions of the UE. Hereinafter, an exemplary embodiment of the present invention will be described with reference to FIGS. 2 to 4.

### 1. System architecture

Referring to FIG. 2, it is assumed that the handover source is a source-side communication apparatus 10 and the handover target is a target-side communication apparatus 20, and that they perform a handover of a UE 40 in accordance with a handover command from an upper-level network 30. Here, the source-side communication apparatus 10 and the target-side communication apparatus 20 may be radio base stations managing respective cells, or may be control stations controlling respective radio base stations.

In such a wireless communication system, the target-side communication apparatus 20 has completed preparation for a connection with the UE 40 at a handover request from the upper-level network 30 and is in a state of waiting for a connection reconfiguration message from the UE 40. In this state, if the UE 40 has moved into a target cell C20 before the handover is completed and has lost a connection due to weakened radio waves from the source-side communication apparatus 10 (too late handover), the UE 40 searches for a reconnection target and establishes a connection with the target-side communication apparatus 20.

The target-side communication apparatus 20, when establishing a connection with the UE 40, generates handover information indicating that a reconnection has been made after a handover of the UE 40 failed once, sets this handover information in a handover complete notice that is the same as one sent when a handover has succeeded, and sends it to the upper-level network 30. Handover process information and the like can be set as handover information in a handover complete notice. For the handover information, for example, it is possible to set information indicating normal completion if a handover has been completed normally, or to set information indicating a too late handover if a handover has succeeded by means of reconnection after a radio link failure occurred to the UE 40, or to set information indicating a handover to wrong cell if a connection has been made to another cell managed by the target-side communication apparatus 20.

The upper-level network 30, when receiving the handover complete notice from the target-side communication apparatus 20, sets the handover information therein in a notice indicating a handover success and sends it to the source-side communication apparatus 20. Thus, the source-side communication apparatus 20 can learn from the handover information how the handover from its own station's cell C10 to the target cell C20 has succeeded in actuality and can use it for optimization of a handover parameter.

Hereinafter, a description will be given of the respective functions of the source-side communication apparatus 10 and the target-side communication apparatus 20, assuming that they are a source base station 10 and a target base station 20, respectively, and that the upper-level network 30 is a core network 30. However, since a communication apparatus according to the present exemplary embodiment can be any of the source-side and target-side ones depending on the moving direction of a UE, it is conceivable that a single base station is equipped with both source-side and target-side functions. Here, only functional components related to the present exemplary embodiment are depicted, omitting the rest of the functional components of a base station.

Referring to FIG. 3, the source base station 10 functionally includes a wireless communication section 101 for performing wireless communication with UEs, a handover control section 102, a communication section 103 for performing communication with the core network 30, and a container analysis section 104 that reads handover information from a container set in a message from the core network 30 and analyzes it. Note that the functions described below of the handover control section 102 and the container analysis section 104 can also be implemented by executing programs stored in a memory (not shown) on a computer (CPU: Central Processing Unit).

The target base station 20 includes a wireless communication section 201 for performing wireless communication with UEs, a handover control section 202, a communication section 203 for performing communication with the core network 30, and a container generation section 204 that generates a container for storing handover information, which will be described later. Note that the functions described below of the handover control section 202 and the container generation section 204 can also be implemented by executing programs stored in a memory (not shown) on a computer (CPU: Central Processing Unit).

Moreover, if the communication apparatuses according to the present exemplary embodiment are control stations controlling base stations on the source and target sides, they also have basically the same configurations, only with the difference that the wireless communication sections 101 and 201 are sections for communication with respective radio base stations. Hereinafter, handover control procedures by the source base station 10 and the target base station 20 according to the present exemplary embodiment will be described with reference to FIG. 4.

### 2. Handover control operations on source side and target side

Referring to FIG. 4A, the handover control section 202 of the target base station 20, when securing resources required for a connection with the UE 40 in response to a handover request from the core network 30, sends the core network 30 an acknowledgement response ACK in response to the handover request (Operation 210). Subsequently, the handover control section 202 checks whether or not a notice of the completion of configuration for a handover has been received from the UE 40 (Operation 211) and, if no such handover complete notice is received from the UE 40 (Operation 211; NO), establishes a radio connection with the UE 40 (Operation 212). Subsequently, the container generation section 204 generates handover information indicating that a reconnection has been made to the target base station after a handover of the UE 40 failed once, and stores it in a handover information container (Operation 213). However, when a reconnection has been made to another cell of the target base station 20, handover information indicating that a handover has been made to a wrong cell is generated and stored in a handover information container.

The handover control section 202 sets the thus generated container in a handover complete notice and sends it to the core network 30 (Operation 214). Note that if a handover preparation complete notice is received from the UE 40 (Operation 211; YES), the handover control section 202 sends a handover complete notice to the core network 30 (Operation 215). Note that when a handover preparation complete notice is received from the UE 40 (Operation 211; YES), it is also possible that the container generation section 204 stores handover information indicating the normal completion of the handover in a container, sets the thus generated container in a handover complete notice, and sends it to the core network 30.

Referring to FIG. 4B, the handover control section 102 of the source base station 10 performs handover processing for the UE 40 in accordance with a handover command from the core network 30 (Operation 110). When a connection/resource release command indicating success in the handover of interest is received from the core network 30 (Operation 111), the container analysis section 104 checks whether or not the received release command includes a handover information container (Operation 112). If such a container is included (Operation 112; YES), the handover information is obtained by analyzing this container (Operation 113), and thereafter a connection or resources related to the UE 40 are released. When such a container is not included (Operation 112; NO), a connection or resources related to the UE 40 are immediately released and the handover processing is completed (Operation 114).

### 3. Effects

According to the above-described exemplary embodiment of the present invention, when the target base station 20 establishes a connection with the UE 40 during the process of a handover, the target base station 20 sets a container storing information about this handover in a handover complete message and sends it to the core network 30. Accordingly, the source base station 10 can receive the handover information container via the core network 30 and thus can detect a handover status such as too late handover or handover to wrong cell.

Moreover, since the present exemplary embodiment does not depend on either the types of UEs or radio access systems, it is possible to detect a too late handover/handover to wrong cell even in case of a handover between different access technologies (Inter RAT HO). The present exemplary embodiment can be applied to E-UTRAN (Evolved Universal Terrestrial Access Network), UTRAN, HRPD (High Rate Packet Data), eHRPD (Evolved-HRPD), or GSM (Global System for Mobile Communication), or also to a handover between any of them. Hereinafter, examples of the present invention will be described in detail with reference to drawings.

### 4. Examples

### 4.1) First example

In a wireless communication system according to a first example of the present invention, both the source base station and the target base station are communication apparatuses of E-UTRAN and here referred to as a source eNB 10a and a target eNB 20a, respectively. Moreover, it is assumed that the core network 30 is a MME (Mobility Management Entity) 30a performing mobility management.

According to the present example, handover control through the S1 interface (hereinafter, referred to as S1 Handover) between the source eNB 10a and the target eNB 20a and the MME 30a enables the source eNB 10a to detect a too late handover/handover to wrong cell. Accordingly, even in the absence of a X2 interface connection, the source eNB 10 can detect a too late handover/HO to wrong cell. Hereinafter, a description will be given of a case where there is no X2 interface connection.

Referring to FIG. 5, the handover control section 102 of the source eNB 10a triggers a handover, based on a Measurement Report from a UE 40 (Operation 301). At this time, since there is no X2 interface connection, the source eNB 10a sends a S1: Handover Required message to the MME 30a over the S1 interface (Operation 302). The MME 30a having received the S1: Handover Required message sends a S1: Handover Request message for commanding a S1 Handover to the target eNB 20a (Operation 303).

The handover control section 202 of the target eNB 20a, when securing resources for the UE 40 to be handed over, sends a S1: Handover Request Acknowledge message to the MME 30a (Operation 304). This S1: Handover Required Acknowledge message includes a RRC Connection Reconfiguration Request message that the source eNB 10a will send to the UE 40 later. After sending this S1: Handover Required Acknowledge message, the target eNB 20a falls in a state of waiting to receive a RRC Connection Reconfiguration Complete message from the UE 40.

The MME 30a having received the S1: Handover Request Acknowledge message sends a S1: Handover Command message for commanding a S1 Handover to the source eNB 10a (Operation 305). At this time, the MME 30a transfers the RRC Connection Reconfiguration Request message from the S1: Handover Request Acknowledge message to the S1: Handover Command. The source eNB 10a having received the S1: Handover Command message sends the RRC Connection Reconfiguration Request message included in the S1: Handover Command message to the UE 40 (Operation 306).

Thereafter, it is assumed that the UE 40 detects a radio link failure due to radio environment deterioration (Operation 307) and makes a reconnection to a target cell C20 belonging to the target eNB 20a (Operation 308). At this time, the target eNB 20a is in a state of waiting to receive a RRC Connection Reconfiguration Complete message as described above. Accordingly, the container generation section 204, when detecting that the UE 40 having made a reconnection is under S1 Handover, sets a container including handover information in a normal S1: Handover Notify message for completing a S1 Handover and sends it to the MME 30a (Operation 309).

The handover information included in the container in this case indicates that a connection has been made to the target cell C20 after a radio link failure occurred, or that a connection has been made to another cell than the target cell C20 after a radio link failure occurred (in such a case, also including information about the connected cell). Note that when the S1 Handover is normally completed without any problem, handover information to that effect is included, or a container itself is not set in the S1: Handover Notify message.

When receiving the S1: Handover Notify message in which the container is set, the MME 30a sets this container in a UE Context Release Command message and sends it to the source eNB 10a (Operation 310).

The container analysis section 104 of the source eNB 10a, when receiving the UE Context Release Command message in which the container is set, analyzes this container and determines whether a too late handover occurred or whether a HO to wrong cell occurred. Then, after releasing a S1 connection related to the UE 40 in accordance with the UE Context Release Command message, the source eNB 10a sends a UE Context Release Complete message to the MME 30a (Operation 311).

### 4.2) Second example

In a wireless communication system according to a second example of the present invention, the source base station and the target base station are a communication apparatus of E-UTRAN and a communication apparatus of UTRAN, respectively, and here referred to as a source eNB 10b and a target RAN (Radio Access Network) 20b, respectively. Moreover, it is assumed that the core network issuing a handover command is a core network 30b. According to the present example, handover control through the S1 interface (S1 Handover) between the source eNB 10b and the target RAN 20b and the core network 30b enables the source eNB 10b to detect a too late handover/handover to wrong cell. Hereinafter, in FIG. 6, the same operations as those of FIG. 5 according to the first example are given the same reference signs, and a description will be simplified.

Referring to FIG. 6, the handover control section 102 of the source eNB 10a triggers a handover, based on a Measurement Report from a UE 40 (Operation 301) and sends a S1: Handover Required message to the core network 30b over the S1 interface (Operation 302). The core network 30b having received the S1: Handover Required message sends a RANAP: Relocation Request message of the RANAP (Radio Access Network Application Part) protocol to the target RAN 20b (Operation 303b).

The handover control section 202 of the target RAN 20b, when securing resources for the UE 40 to be handed over, sends a RANAP: Relocation Request Acknowledge message to the core network 30b (Operation 304b). After sending this RANAP: Relocation Request Acknowledge message, the target RAN 20b falls in a state of waiting to receive a handover configuration complete message from the UE 40.

The core network 30b having received the RANAP: Relocation Request Acknowledge message sends a S1: Handover Command message for commanding a S1 Handover to the source eNB 10b (Operation 305). The source eNB 10b having received the S1: Handover Command message sends a MobilityFromEUTRACommand message to the UE 40 (Operation 306b).

Thereafter, it is assumed that the UE 40 detects a radio link failure due to radio environment deterioration (Operation 307) and makes a reconnection to a target cell C20b belonging to the target RAN 20b (Operation 308). At this time, the target RAN 20b is in a state of waiting to receive a handover configuration complete message from the UE 40 as described above. Accordingly, the container generation section 204, when detecting that the UE 40 having made a reconnection is under RANAP Relocation, sets a container including handover information in a normal RANAP: Relocation Complete message for completing a RANAP Relocation and sends it to the core network 30b (Operation 309b). The handover information included in the container is similar to that of the first example.

When receiving the RANAP: Relocation Complete message in which the container is set, the core network 30b sets this container in a UE Context Release Command message and sends it to the source eNB 10b (Operation 310). The container analysis section 104 of the source eNB 10b, when receiving the UE Context Release Command message in which the container is set, analyzes this container and determines whether a too late handover occurred or whether a HO to wrong cell occurred. Then, after releasing a S1 connection related to the UE 40 in accordance with the UE Context Release Command message, the source eNB 10b sends a UE Context Release Complete message to the core network 30b (Operation 311).

Note that the present example can also be applied to a handover from EUTRAN to GSM because such a handover follows approximately the same sequence as in FIG. 6 (however, the names of messages used on the GSM side are not the same).

### 4.3) Third example

In a wireless communication system according to a third example of the present invention, the source base station and the target base station are a communication apparatus of UTRAN and a communication apparatus of E-UTRAN, respectively, and here referred to as a source RAN 10c and a target eNB 20c, respectively. Moreover, it is assumed that the core network issuing a handover command is a core network 30c. According to the present example, handover control through the S1 interface (S1 Handover) between the source RAN 10c and the target eNB 20c and the core network 30c enables the source RAN 10c to detect a too late handover/handover to wrong cell. Hereinafter, in FIG. 7, the same operations as those of FIG. 5 according to the first example are given the same reference signs, and a description will be simplified.

Referring to FIG. 7, the handover control section 102 of the source RAN 10c triggers a handover, based on a Measurement Report from a UE 40 (Operation 301) and sends a RANAP: Relocation Required message of the RANAP protocol to the core network 30c (Operation 302c). The core network 30c having received the RANAP: Relocation Required message sends a S1: Handover Request message to the target eNB 20c (Operation 303).

The handover control section 202 of the target eNB 20c, when securing resources for the UE 40 to be handed over, sends a S1: Handover Request Acknowledge message to the core network 30c (Operation 304). After sending this S1: Handover Required Acknowledge message, the target eNB 20c falls in a state of waiting to receive a RRC Connection Reconfiguration Complete message from the UE 40.

The core network 30c having received the S1: Handover Request Acknowledge message sends a RANAP: Relocation Command message to the source RAN 10c (Operation 305c). The source RAN 10c having received the RANAP: Relocation Command message sends a HandoverfromUTRAN message to the UE 40 (Operation 306c).

Thereafter, it is assumed that the UE 40 detects a radio link failure due to radio environment deterioration (Operation 307) and makes a reconnection to a target cell C20c belonging to the target eNB 20c (Operation 308). At this time, the target eNB 20c is in a state of waiting to receive a RRC Connection Reconfiguration Complete message as described above. Accordingly, the container generation section 204, when detecting that the UE 40 having made a reconnection is under handover, sets a container including handover information in a normal S1:Handover Notify message for completing a S1: Handover and sends it to the core network 30c (Operation 309). The handover information included in the container is similar to that of the first example.

When receiving the S1: Handover Notify message in which the container is set, the core network 30c sets this container in a RANAP: Iu Release Command message and sends it to the source RAN 10c (Operation 310c). The container analysis section 104 of the source RAN 10c, when receiving the RANAP: Iu Release Command message in which the container is set, analyzes this container and determines whether a too late handover occurred or whether a HO to wrong cell occurred. Then, after releasing all resources related to the Iu interface of the UE 40 in accordance with the RANAP: Iu Release Command message, the source RAN 10c sends a RANAP: Iu Release Complete message to the core network 30c (Operation 311 c).

Note that the present example can also be applied to a handover from GSM to EUTRAN because such a handover follows approximately the same sequence as in FIG. 7 (however, the names of messages used on the GSM side are not the same).

### 4.4) Fourth example

In a wireless communication system according to a fourth example of the present invention, a case of Intra-UMTS (Universal Mobile Telecommunications System) SRNS (Serving Radio Network Subsystem) Relocation will be shown. Both the source base station and the target base station are communication apparatuses of UTRAN and here referred to as a source RAN 10d and a target RAN 20d, respectively. Moreover, it is assumed that the core network issuing a handover command is a core network 30d. According to the present example, handover control through the Iu interface (RANAP: Relocation) between the source RAN 10d and the target RAN 20d and the core network 30d enables the source RAN 10d to detect a too late handover/handover to wrong cell. Hereinafter, in FIG. 8, the same operations as those of FIG. 5 according to the first example are given the same reference signs, and a description will be simplified.

Referring to FIG. 8, the handover control section 102 of the source RAN 10d triggers a handover, based on a Measurement Report from a UE 40 (Operation 301) and sends a RANAP: Relocation Required message to the core network 30d (Operation 302d). The core network 30d having received the RANAP: Relocation Required message sends a RANAP: Relocation Request message to the target RAN 20d (Operation 303d).

The handover control section 202 of the target RAN 20d, when securing resources for the UE 40 to be handed over, sends a RANAP: Relocation Request Acknowledge message to the core network 30d (Operation 304d). After sending this RANAP: Relocation Request Acknowledge message, the target RAN 20d falls in a state of waiting to receive a handover configuration complete message from the UE 40.

The core network 30d having received the RANAP: Relocation Request Acknowledge message sends a RANAP: Relocation Command message to the source RAN 10d (Operation 305d). The source RAN 10d having received the RANAP: Relocation Command message sends a RRC message to the UE 40 (Operation 306d).

Thereafter, it is assumed that the UE 40 detects a radio link failure due to radio environment deterioration (Operation 307) and makes a reconnection to a target cell C20d belonging to the target RAN 20d (Operation 308). At this time, the target RAN 20d is in a state of waiting to receive a handover configuration complete message from the UE 40 as described above. Accordingly, the container generation section 204, when detecting that the UE 40 having made a reconnection is under RANAP Relocation, sets a container including handover information in a normal RANAP: Relocation Complete message for completing a RANAP Relocation and sends it to the core network 30d (Operation 309d). The handover information included in the container is similar to that of the first example.

When receiving the RANAP: Relocation Complete message in which the container is set, the core network 30d sets this container in a RANAP: Iu Release Command message and sends it to the source RAN 10d (Operation 310d). The container analysis section 104 of the source RAN 10d, when receiving the RANAP: Iu Release Command message in which the container is set, analyzes this container and determines whether a too late handover occurred or whether a HO to wrong cell occurred. Then, after releasing all resources related to the Iu interface of the UE 40 in accordance with the RANAP: Iu Release Command message, the source RAN 10d sends a RANAP: Iu Release Complete message to the core network 30d (Operation 311 d).

### 4.5) Fifth example

In a wireless communication system according to a fifth example of the present invention, a case of Intra-UMTS Enhanced Relocation will be shown. Both the source base station and the target base station are communication apparatuses of UTRAN and here referred to as a source RAN 10e and a target RAN 20e, respectively. Moreover, it is assumed that the core network issuing a handover command is a core network 30e. According to the present example, handover control (RANAP: Relocation) is performed between the source RAN 10e and the target RAN 20e, and handover information is transferred from the target RAN 20e to the source RAN 10e via the core network 30e, whereby the source RAN 10e can detect a handover status such as too late handover/handover to wrong cell.

Referring to FIG. 9, the handover control section 102 of the source RAN 10e triggers a handover, based on a Measurement Report from a UE 40 (Operation 401) and sends a RANAP: Enhanced Relocation Request message to the target RAN 20e (Operation 402). The target RAN 20e having received the RANAP: Relocation Request message returns a RANAP: Enhanced Relocation Response message to the source RAN 10e (Operation 403).

Subsequently, the handover control section 102 of the source RAN 10e sends a RRC message to the UE 40 to be handed over (Operation 404) and sends a RANAP: Relocation Commit message to the target RAN 20e (Operation 405). After this RANAP: Relocation Commit message has been sent, the target RAN 20e falls in a state of waiting to receive a handover configuration complete message from the UE 40.

Thereafter, it is assumed that the UE 40 detects a radio link failure due to radio environment deterioration (Operation 406) and makes a reconnection to a target cell C20e belonging to the target RAN 20e (Operation 407). At this time, the target RAN 20e is in a state of waiting to receive a handover configuration complete message from the UE 40 as described above. Accordingly, the container generation section 204, when detecting that the UE 40 having made a reconnection is under RANAP Relocation, sends a normal RANAP: Enhanced Relocation Complete Request message for completing a handover to the core network 30e (Operation 408). It is possible to set a container including handover information in this RANAP: Enhanced Relocation Complete Request message. The handover information included in the container is similar to that of the first example.

The core network 30e, in response to the RANAP: Enhanced Relocation Complete Request message, returns a RANAP: Enhanced Relocation Complete Response message (Operation 409), and the target RAN 20e, in response to this, returns a RANAP: Enhanced Relocation Complete Confirm message to the core network 30e (Operation 410). A container is set in this RANAP: Enhanced Relocation Complete Confirm message when no container is set in the RANAP: Enhanced Relocation Complete Request message in Operation 408.

When receiving the RANAP: Enhanced Relocation Complete Confirm message, the core network 30e sets a container in a RANAP: Iu Release Command message and sends it to the source RAN 10e (Operation 411). The container analysis section 104 of the source RAN 10e, when receiving the RANAP: Iu Release Command message in which the container is set, analyzes this container and determines whether a too late handover occurred or whether a HO to wrong cell occurred. Then, after releasing all resources related to the Iu interface of the UE 40 in accordance with the RANAP: Iu Release Command message, the source RAN 10e sends a RANAP: Iu Release Complete message to the core network 30e (Operation 412).

### [Industrial Applicability]

The present invention is applicable to handover control in mobile communication systems.

### [Reference Signs List]

- 10: Source-side communication apparatus (source base station)
- 20: Target-side communication apparatus (target base station)
- 30: Upper-level network (core network)
- 101: Wireless communication section
- 102: Handover control section
- 103: Communication section
- 104: Container analysis section
- 201: Wireless communication section
- 202: Handover control section
- 203: Communication section
- 204: Handover information container generation section
- C10: Source cell
- C20: Target cell

## Claims

1. A communication apparatus managed by an upper-level network, **characterized by** comprising:
handover information generation means that, when establishing a connection with a terminal during a handover operation of the terminal, generates information about handover of the terminal; and
handover control means that sets the information about handover of the terminal in a handover complete message and sends it to the upper-level network.

2. The communication apparatus according to claim 1, **characterized in that** the handover information generation means generates a container including the information about the handover, wherein the container is added to the handover complete message.

3. The communication apparatus according to claim 1 or 2, **characterized in that** the information about the handover includes information indicating a cause of a handover failure.

4. The communication apparatus according to claim 3, **characterized in that** the cause of the handover failure includes a too-late handover (Too Late Handover) or a handover to a wrong cell (HO to wrong cell).

5. The communication apparatus according to any one of claims 1 to 4, **characterized in that** the communication apparatus supports E-UTRAN (Evolved Universal Terrestrial Access Network), UTRAN, HRPD (High Rate Packet Data), eHRPD (Evolved-HRPD), or GSM (Global System for Mobile Communication).

6. A communication apparatus managed by an upper-level network, **characterized by** comprising:
handover control means that receives a handover success message from the upper-level network during a handover operation of a terminal and completes the operation for the handover; and
handover information analysis means that acquires information about handover of the terminal from the handover complete message.

7. The communication apparatus according to claim 6, **characterized in that** the handover information analysis means extracts a predetermined container from the handover success message to acquire the information about the handover from the container.

8. The communication apparatus according to claim 6 or 7, **characterized in that** the information about the handover includes information indicating a cause of a handover failure.

9. The communication apparatus according to claim 8, **characterized in that** the cause of the handover failure includes a too-late handover (Too Late Handover) or a handover to a wrong cell (HO to wrong cell).

10. The communication apparatus according to any one of claims 6 to 9, **characterized in that** the communication apparatus supports E-UTRAN (Evolved Universal Terrestrial Access Network), UTRAN, HRPD (High Rate Packet Data), eHRPD (Evolved-HRPD), or GSM (Global System for Mobile Communication).

11. A wireless communication system including a plurality of communication apparatuses managed by an upper-level network, **characterized in that**
a target communication apparatus as a target of handover of a terminal, when establishing a connection with the terminal during an operation of the handover, sets information about the handover of the terminal in a handover complete message and sends it to the upper-level network, and
a source communication apparatus as a source of the handover of the terminal acquires the information about the handover from a handover success message received from the upper-level network during the operation of the handover of the terminal.

12. The wireless communication system according to claim 11, **characterized in that** the target communication apparatus generates a container including the information about the handover, wherein the container is added to the handover complete message.

13. The wireless communication system according to claim 11 or 12, **characterized in that** the source communication apparatus extracts a predetermined container from the handover success message to acquire the information about the handover from the container.

14. The wireless communication system according to any one of claims 11 to 13, **characterized in that** the information about the handover includes information indicating a cause of a handover failure.

15. The wireless communication system according to claim 14, **characterized in that** the cause of the handover failure includes a too-late handover (Too Late Handover) or a handover to a wrong cell (HO to wrong cell).

16. The wireless communication system according to any one of claims 11 to 15, **characterized in that** each of the source communication apparatus and the target communication apparatus is a communication apparatus supporting any one or different two of E-UTRAN (Evolved Universal Terrestrial Access Network), UTRAN, HRPD (High Rate Packet Data), eHRPD (Evolved-HRPD), and GSM (Global System for Mobile Communication).

17. A handover control method in a communication apparatus managed by an upper-level network, **characterized by** comprising:
when a connection with a terminal is established during a handover operation of the terminal, generating information about handover of the terminal; and
setting the information about the handover in a handover complete message and sending it to the upper-level network.

18. The handover control method according to claim 17, **characterized in that** a container including the information about the handover is generated, wherein the container is added to the handover complete message.

19. The handover control method according to claim 17 or 18, **characterized in that** the information about the handover includes information indicating a cause of a handover failure.

20. The handover control method according to claim 19, **characterized in that** the cause of the handover failure includes a too-late handover (Too Late Handover) or a handover to a wrong cell (HO to wrong cell).

21. A handover control method in a communication apparatus managed by an upper-level network, **characterized by** comprising:
receiving a handover success message from the upper-level network during handover operation of a terminal; and
acquiring information about handover of the terminal from the handover complete message.

22. The handover control method according to claim 21, **characterized in that** a predetermined container is extracted from the handover success message, wherein the information about the handover is acquired from the container.

23. The handover control method according to claim 21 or 22, **characterized in that** the information about the handover includes information indicating a cause of a handover failure.

24. The handover control method according to claim 23, **characterized in that** the cause of the handover failure includes a too-late handover (Too Late Handover) or a handover to a wrong cell (HO to wrong cell).

25. A handover control method in a wireless communication system including a plurality of communication apparatuses managed by an upper-level network, **characterized by** comprising:
by a target communication apparatus which is a handover target of a terminal, when establishing a connection with the terminal during handover operation of the terminal, setting information about handover of the terminal in a handover complete message and sending it to the upper-level network; and
by a source communication apparatus which is a handover source of the terminal, acquiring the information about handover of the terminal from a handover success message received from the upper-level network during handover operation of the terminal.
